Europäisches Patentamt

European Patent Office

Office européen des brevets

(19)

(11) Veröffentlichungsnummer: **0 220 595**
**B1**

(12) **EUROPÄISCHE PATENTSCHRIFT**

(45) Veröffentlichungstag der Patentschrift: **30.01.91**

(21) Anmeldenummer: **86114189.3**

(22) Anmeldetag: **14.10.86**

(51) Int. Cl.⁵: **G 01 F 15/06,** G 01 F 1/075, G 01 F 1/115, G 01 F 3/10

(54) **Elektromagnetischer Impulsaufnehmer für Durchflussmesser.**

(30) Priorität: **30.10.85 DE 3538514**

(43) Veröffentlichungstag der Anmeldung:
**06.05.87 Patentblatt 87/19**

(45) Bekanntmachung des Hinweises auf die Patenterteilung:
**30.01.91 Patentblatt 91/05**

(84) Benannte Vertragsstaaten:
**AT BE FR GB IT NL SE**

(56) Entgegenhaltungen:
**DE-A-2 922 252
DE-A-3 321 952
DE-B-2 157 127**

(73) Patentinhaber: **Bopp & Reuther Aktiengesellschaft
Carl-Reuther-Strasse 1
D-6800 Mannheim 31 (DE)**

(72) Erfinder: **Jerger, Walter, Dipl.-Ing.
Glücksburger Weg 258
D-6800 Mannheim 31 (DE)**
Erfinder: **Böhm, Jürgen, Dr.-Ing.
Krautheimerstrasse 11
D-6800 Mannheim-Wallstadt (DE)**

Courier Press, Leamington Spa, England.

EP 0 220 595 B1

**Beschreibung**

Die Erfindung bezieht sich auf einen Durchflußmesser insbesondere größerer Nennweiten, elektromagnetischen Impulsaufnehmer bei dem ein in der Meßkammer umlaufendes Meßrad eine Magneteinrichtung trägt und außerhalb des unter Betriebsdruck stehenden Raumes des Durchflußmesser ein nach dem Wiegand-Prinzip arbeitender Sensor mit einer Veilzahl von auf der Mantelfläche eines Impulsdrahtzylinders angeordneten, in Längsrichtung verlaufenden Impulsdrähten vorgesehen ist, wobei bei jeder Umdrehung des Meßrades magnetische Impulse erzeugt werden, die in einer konzentrisch innerhalb des Impulsdrahtzylinders liegenden Aufnehmerspule in Spannungsimpulse umgewandelt werden, deren Anzahl ein Maß für das durch den Durchflußmesser geströmte Meßmedium ist.

Aus der DE—OS 33 21 952 ist ein solcher Durchflußmesser mit kleinen Nennweiten bekannt, bei dem die Impulsdrähte mit der Aufnehmerspule in einer Ausnehmung der Meßkammerstirnwand angeordnet sind. Durch diese stirnseitige Anordnung des Impulsdraht-Sensors läßt sich auch bei kleinsten Zählernennweiten ein im Durchmesser ausreichend großer Aufnehmerzylinder vorsehen, der eine Vielzahl von Impulsdrähten aufnehmen kann und dadurch eine hohe Auflösung in kleine Teilvolumina ermöglicht. Bei Anwendung dieses Prinzips auf Zähler größerer Nennweite würde der Aufnahmerzylinder mit zunehmendem Durchmesser des Meßrades im Durchmesser immer größer werden, so daß der Impulsaufnehmer dann zu aufwendig und zu viel Platz benötigen würde. Außerdem müßte die vom Magnetfeld der im Meßrad eingesetzten Magnete zu durchdringende Meßkammerstirnwand wegen des wachsenden Aufnehmerdurchmessers aus Festigkeitsgründen dickwandiger ausgebildet werden, so daß der Abstand zwischen den Magneten und den Impulsdrähten zu groß würde und damit eine einwandfreie Funktion des Aufnehmers erschweren oder unmöglich machen würde.

Aufgabe der Erfindung ist es, einen Durchflußmesser insbesondere größerer Nennweiten, mit einem einfachen und platzsparenden elektromagnetischen Impulsaufnehmer zu schaffen, bei dem unabhängig von der Nennweite ein geringer Abstand zwischen den Meßradmagneten und den Impulsdrähten und damit stets eine zuverlässige Impulserzeugung und eine möglichst fehlerfreie Mengenmessung gewährleistet sind.

Die Lösung dieser Aufgabe wird in den Merkmalen der Patentansprüche gesehen.

Dadurch, daß entsprechend dem Merkmal des Anspruchs 1 das Meßrad auf einer als Hohlachse ausgebildeten feststehenden Achse drehbar gelagert ist und in den Hohlraum der Achse als Impulsdraht-Sensor eine zylindrische Sonde eingeschoben ist, läßt sich der Impulsaufnehmer im Inneren der Meßradachse auf kleinstem Raum unterbringen und in einfacher Weise von der Offenseite der Hohlachse her einschieben so daß kein zusätzlicher Raum mehr für die Unterbringung des Impulsaufnehmers benötigt wird. Da der Impulsaufnahmer jetzt im Inneren des Meßrades selbst liegt, ist es außerdem gegen magnetische Störfelder besser geschützt als ein außen liegender Impulsaufnehmer.

Die Sonde trägt in ihrem Sondenkopf den Impulsdrahtzylinder und die Aufnehmerspule und konzentrisch innerhalb des Spulenhohlraumes ein zylindrisches Magnetjoch, wodurch sich der Sensor besonders einfach herstellen und einbauen läßt, und durch das zylindrische Magnetjoch wird eine Beeinflussung des Magnetfeldes in der Weise bewirkt, daß das zwischen dem jeweiligen Magneten und dem Magnetjoch verlaufende Magnetfeld im Bereich der Impulsdrähte durch Ablenkung nach innen und somit durch entsprechende Konzentration eine besonders starke Änderung mit dem Drehwinkel erfährt. Dadurch wird eine exakte Arbeitsweise der Impulsdrähte ermöglicht.

Des Sondenschaft des Impulsdraht-Sensors dient hierbei zur geschützten Aufnahme der elektrischen Impulsleitungen und gleichzeitig trägt er Halteelemente, mit denen die Sonde leicht in der gewünschten Einschiebtiefe am Zählergehäuse fixiert werden kann. Die Magnetanordnung besteht hierbei aus zwei in Nähe der Hohlachse in das Meßrad eingesetzten, parallel zur Hohlachse verlaufenden Magneten entgegengesetzter Polarität, die bei der Drehung des Meßrades den Sondenkopf umkreisen und die Impulsdrähte mit Magnetfeldern wechselnder Richtung beaufschlagen und dadurch die Impulse im Impulsdraht-Sensor auslösen.

Die Erfindung läßt sich in besonders einfacher Weise bei Durchflußmessern verwirklichen, die ein auf einer feststehenden Hohlachse drehbar gelagertes Meßrad tragen, das einen Ringraum für den Einbau einer Magnetkupplungshälfte trägt, wobei für die Unterbringung der anderen auf einer Antriebswelle für das Zählwerk sitzenden Magnetkupplungshälfte der Innenraum der Hohlachse vorgesehen ist. Hier lassen sich im Ringraum für die Magnetkupplungshälften im Meßrad anstelle der einen Magnetkupplungshälfte die zu Beaufschlagung des Impulsdraht-Sensors erforderlichen Magnete einsetzen und anstelle der anderen Magnetkupplungshälfte kann die Sonde in den Innenraum der Hohlachse eingeschoben werden. Dadurch läßt sich der Durchflußmesser im Baukastensystem ohne großen mechanischen Eingriff entweder mit magnetischer Übertragung des Meßradumdrehungen und Direktanzeige oder anstelle dieser mechanischen Übertragung mit einem elektromagnetischen Abgriff der Meßradbewegung mit Fernübertragung der Durchflußimpulse ausrüsten.

Der für die Magnetkupplungshälfte im Meßrad vorgesehene Ringraum kann hierbei in einfacher Weise dadurch ausgenutzt werden, daß gemäß dem Merkmal des Anspruchs 2 anstelle der ringförmigen Magnetkupplungshälfte ein gleichgroßer Magnetring eingesetzt ist, der in achsparalleler Richtung magnetisiert und in ein oder mehrere Zonenpaare eingeteilt ist, die abwechselnd in entgegengesetzter Richtung und in unterschiedlicher Stärke magnetisiert sind.

Dadurch, daß entsprechend dem Merkmal des Anspruchs 3 der Sondenschaft mehrere unterschiedliche Einschiebtiefen fixierende Ringnuten trägt und je nach Zählervariante und Zählernennweite in eine dieser Ringnuten ein Sicherungsring eingesetzt ist, der sich beim Einschieben der Sonde gegen einen Absatz der Hohlachse legt und mit der Sonde durch eine Verschraubung in dieser Einschiebstellung gehalten wird, wird einen Einheitssonde für unterschiedliche Nennweiten und verschiedene Durchflußmesserausführungen geschaffen, so daß der Impulsgeber in größeren Stückzahlen billiger gefertigt werden kann.

Besitzt die Hohlachse einen größeren Innendurchmesser, so kann zum Einsetzen der Sonde entsprechend Anspruch 4 auch eine Zentrierbüchse auf den Sondenschaft aufgeschoben und durch in Haltenuten eingesetzte Sicherungsringe fixiert sein. Dadurch kann die Sonde als Einheitssonde auch in Hohlachsen mit unterschiedlichen Innendurchmessern verwendet werden.

Insbesondere bei Temperaturschwankungen des zu messenden Mediums kann es zur Vermeidung von Mengenmeßfehlern erforderlich sein, eine Temperaturkompensation vorzusehen. Hierfür muß außer der Volumenerfassung über den Impulsdraht-Sensor ein Temperaturfühler zur Erfassung der Mediumtemperatur in der Meßkammer vorgesehen sein. Wird der als Sonde ausgebildete Impulsdraht-Sensor entsprechend dem Merkmal des Anspruchs 5 in seinem Inneren mit einem Temperaturfühler ausgerüstet, dessen Signalleitung zusammen mit der Signalleitung der Sonde nach außen geführt ist, so entfällt die Anbringung einer gesonderten Aufnahmetasche für den Temperaturfühler im Zählergehäuse Vielmehr ist der Temperaturfühler jetzt in einfacher und platzaparender Weise im meßtechnisch günstigen Zentrum des Durchflußmesser in der Sonde integriert.

Die Erfindung wird anhand mehrerer Ausführungsbeispiele in der Zeichnung näher erläutert, und zwar zeigt:

Fig. 1 einen ovalradzähler im Längsschnitt mit einer in der Hohlachse eines Ovalrades eingebauten Sonde,

Fig. 2 den Kopf der Sonde nach Fig. 1 in vergrößertem Maßstab,

Fig. 3 einen anderen Ovalradzähler im Längsschnitt mit eingebauter Sonde, deren vergrößerter Sondenkopf in einen dünnwandigen Abschnitt der Hohlachse eingesetzt ist und

Fig. 4 eine in das Innere der Hohlachse eines vom Meßrad angetriebenen Rotors eingeschobene Sonde.

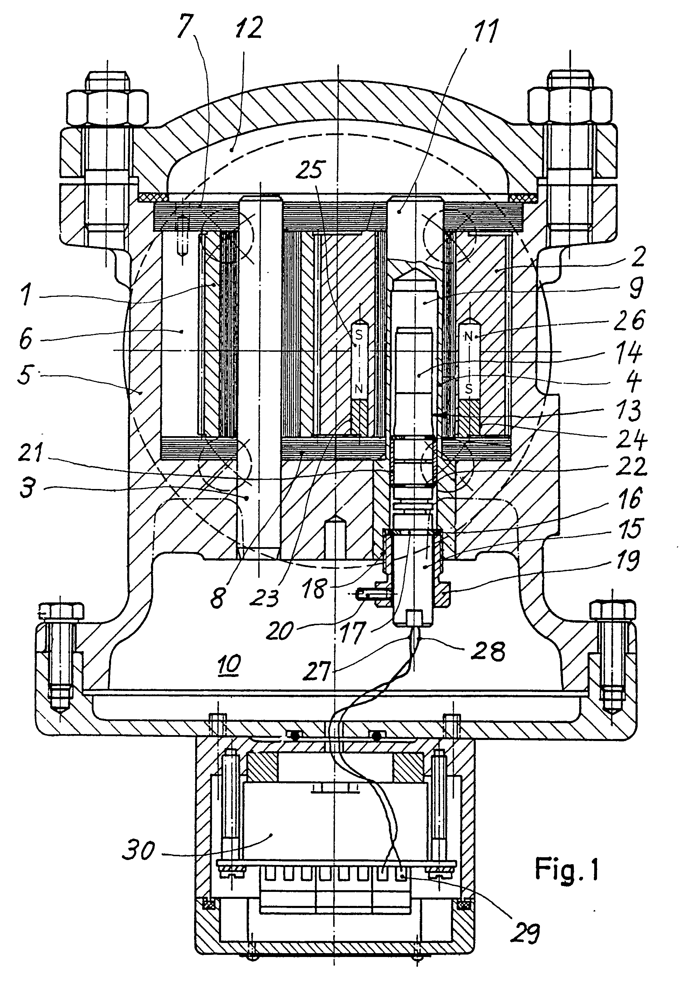

Der in der Fig. 1 gezeigte Ovalradzähler weist die beiden über ein Zahnprofil miteinander in Eingriff stehenden Meßräder 1 und 2 auf, die auf den festen Achsen 3 und 4 gelagert sind und in der vom Gehäuse 5 umschlossenen Meßkammer 6 umlaufen. Die Meßkammer 6 wird an den beiden Stirnseiten der Meßräder 1 und 2 durch die Endplatten 7 und 8 begrenzt. Die Achse 4 ist als Hohlachse ausgebildet, wobei der Achshohlraum 9 frei in die drucklose Gehäusekammer 10 einmündet und auf der anderen Seite durch das geschlossene Achsende 11 zu dem unter Betriebsdruck stehenden Deckelraum 12 hin abgeschlossen ist. In den Innenraum 9 der Hohlachse 4 ist der als Sonde ausgebildete Impulsdraht-Sensor 13 (sonde) eingeschoben. Diese Sonde 13 besitzt einen Sondenkopf 14 mit den Impulsdrähten, der Aufnehmerspule und einem Magnetjoch und wird im unteren Bereich durch einen Sondenschaft 15 mit dem Halteelement 16 zur Fixierung der Sonde 13 in der Hohlachse 4 gebildet.

Das Halteelement 16 ist als Sicherungsring ausgebildet, der je nach Zählerausführung und Zählergröße in eine der Fixierungsnuten 17 des Sondenschaftes 15 eingesetzt ist. Die Hohlachse 4 trägt an ihrem offenen Ende einen mit Innengewinde versehenen Absatz 18, in den eine den Sicherungsring 16 ein spannende und damit die Sonde 13 fixierdende Halteschraube 19 eingedreht ist. Die Haltschraube 19 ist mit einer die Winkeleinstellung der Sonde 13 arretierenden Madenschraube 20 versehen. Die Sonde 13 ist als Einheitssonde auch zum Einsetzen in Hohlachsen von Durchflußmessern mit unterschiedlichen Innendurchmessern ausgebildet, wobei beim Einsetzen in eine Hohlachse mit größerem Innendurchmesser eine Zentrierbüchse 21 auf den Sondenschaft 15 aufgeschoben ist. Diese Zentrierbüchse 21 ist durch in Haltenuten 17 eingesetzte weitere Sicherungsringe 22 auf dem Sondenschaft 15 fixiert.

Das auf das Hohlachse 4 umlaufende Meßrad 2 des Durchflußmesser trägt zwei achsparallele Bohrungen 23 und 24, in die entgegengesetzt magnetisierte Stabmagnete 25 und 26 eingesetzt sind. Der Stabmagnet 26 ist gegenüber dem Stabmagneten 25 größer ausgebildet und erzeugt ein stärkeres Magnetfeld als der Stabmagnet 25, wobei die beiden Magnetfelder einander entgegengerichtet sind. Der Innenraum des Sondenschaftes 15 ist hohl ausgebildet und dient zum Hindurchführen der mit der Aufnehmerspule verbundenen Impulsleitungen 27 und 28, welche die durch die Impulsdrähte erzeugten elektrischen Impulse über die Anschlußklemmen 29 dem Verstärker 30 zuführen.

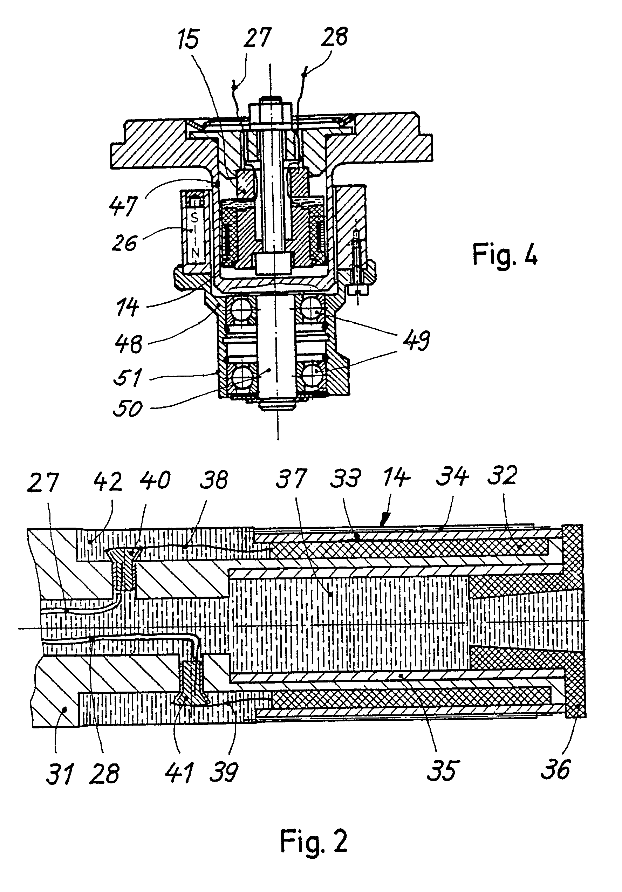

Der in der Fig. 2 gezeigten Sondenkopf 14 besteht aus dem hohlzylindrischen Grundkörper 31, der in seinem vorderen Bereich die Aufnehmerspule 32 trägt, die von einer magnetisch nicht leitenden Hülse 33 umgeben ist. Die Hülse 33 trägt auf dem Umfang verteilte Längsnuten, in die die Impulsdrähte 34 eingelegt und verklebt sind. In den Grundkörper 31 ist innerhalb der Aufnehmerspule 32 noch ein rohrförmiges Magnetjoch 35 eingesetzt, das am freien Ende durch den aus Kunststoff bestehenden Stopfen 36 gesichert ist, der auch die Hülse 33 fixiert. Der Innenraum des Magnetjochs 35 und des Stopfens 36 ist durch eine Vergußmasse 37 ausgefüllt, die nach vorn hin den Stopfen 36 hält und am Sondenschaft 15 die Impulsleitungen 27 und 28 einbettet. Die Anschlußdrähte 38 und 39 der Aufnehmerspule 32 sowie die Lötstützpunkte 40 und 41 sind durch eine äußere Vergußmasse 42 am Sondenkopf 14 eingebettet.

Die Wirkungsweise des in den Fig. 1 und 2 gezeigten Impulsaufnehmers ist folgende:

Die Meßräder 1 und 2 werden vom durchströmenden Medium in Drehung versetzt, wobei die im Meßrad 2 eingesetzten Stabmagnete 25 und 26 die Impulsdrähte 34 des des Sondenkopfes 14 abwechselnd mit unterschiedlich gerichteten und unterschiedlich starken Magnetfeldern beaufschlagen. Dadurch werden in den Impulsdrähten 34 nach dem Wiegand-Prinzip bekannte starke magnetische Impulse erzeugt, die in der Aufnehmerspule 32 in elektrische Impulse umgesetzt werden. Durch das rohrförmige Magnetjoch 35 werden die Magnetfelder der Stabmagneten 25 und 26 zum Sondenkopf 14 hin gezogen, wodurch die Feldeinwirkung auf die Impulsdrähte 34 verstärkt und der Verlauf der Feldstärke über den Drehwinkel des Meßrades steiler wird. Hierdurch kann der Einfluß eines unterschiedlichen Ansprechens der einzelnen Impulsdrähte 34 erheblich verringert werden.

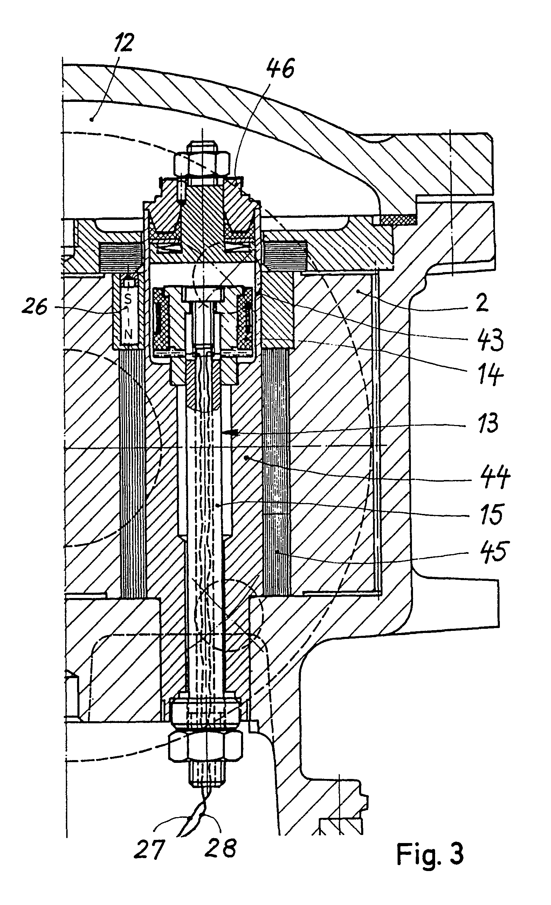

Bei Durchflußmessern größerer Nennweiten kann es vorkommen, daß die Hohlachse aus Festigkeitsgründen nur auf einem geringen Teil ihrer Länge dünnwändig ausgebildet werden kann. In diesem Fall ist, wie die Fig. 3 zeigt, der Sondenkopf 14 in diesem dünnwandigen Bereich 43 untergebracht, während der dünnere Sondenschaft 15 in dem übrigen, im Durchmesser kleineren Hohlraum der Achse 4 eingeschoben ist. Der gegenüber dem Sondenschaft 15 im Durchmesser erweiterte Sondenkopf 14 trägt hier ebenfalls außen die Impulsdrähte und konzentrisch hierzu die Aufnahmerspule und das Magnetjoch entsprechend Fig. 2. Der nicht erweiterte Teil der Hohlachse 4 besitzt eine Wandstärke 44 ausreichender Festigkeit und die Lagerbuchse 45 erstreckt sich hier nur über den nicht erweiterten Teil der Hohlachse 4, so daß die im Meßrad 2 eingesetzten Stabmagnete 25 und 26 noch näher an dem Sondenkopf 14 heranrücken können. Da die Sonde 13 mit dem erweiterten Sondenkopf 14 nur von der Seite des normalerweise unter Betriebsdruck stehenden Deckelraumes 12 her in die Hohlachse eingeschoben werden kann, ist der dünnwandige Hohlachsbereich 43 durch einen druckdichten Verschluß 46 zur Druckseite hin abgeschlossen.

Bei dem Ausführungsbeispiel nach Fig. 4 ist der Impulsdraht-Sensor 13 mit Sondenkopf 14 und Sondenschaft 15 in die feststehende Hohlachse 47 eines Rotors 48 eingeschoben. Der Rotor 48 ist über die Kugellager 49 auf dem Achsstummel 50 drehbart gelagert. Der Drehantrieb erfolgt hier von einem der Meßräder aus über eine nicht gezeigte Mitnahmegabel, die an zwei gegenüberliegenden abgeflachten Seiten 51 des Rotors 48 angreift.

## Patentansprüche

1. Durchflußmesser insbesondere größerer Nennweiten, mit einem elektromagnetischen Impulsaufnehmer bei dem ein in einer Meßkammer (6) umlaufendes Meßrad (2) eine Magneteinrichtung (25, 26) trägt und außerhalb des unter Betriebsdruck stehenden Raumes des Durchflußmessers ein nach dem Wiegand-Prinzip arbeitender Sensor mit einer Vielzahl von auf der Montefläche eines Impulsdrahtzylinders (33) angeordneten, in Längsrichtung verlaufenden Impulsdrähten (34) vorgesehen ist, wobei bei jeder Umdrehung des Meßrades magnetische Impulse erzeugt werden, die in einer konzentrisch innerhalb des Impulsdrahtzylinders liegenden Aufnehmerspule (32) in Spannungsimpulse umgewandelt werden, deren Anzahl ein Maß für das durch den Durchflußmesser geströmte Meßmedium ist, dadurch gekennzeichnet, daß das Meßrad (2) oder ein vom Meßrad angetriebener Rotor (48) auf einer ganz oder teilweise als Hohlachse (4, 47) ausgebildeten feststehenden Achse drehbar gelagert ist, in deren Zylinderhohlraum (9) ein als zylindrische Sonde (13) ausgebildeter Impulsdraht-Sensor eingeschoben ist, der an seinem Sondenkopf (14) den Impulsdrahtzylinder (33) und die Aufnehmerspule (32) und konzentrisch innerhalb des Spulenhohlraumes ein zylindrisches Magnetjoch (35) trägt und einen nach außen führenden Sondenschaft (15) aufweist, der in seinem Inneren die elektrischen Impulsleitungen (27, 28) des Impulsdrahtsensors und außerdem Halteelemente (16, 21) zum Fixieren der Sonde (13) am Gehause (5) des Durchflußmessers enthält, wobei als Magneteinrichtung mindestens ein in Nähe der Hohlachse (4) in das Meßrad (2) oder den Rotor (48) eingesetztes, parallel zur Hohlachse verlaufendes und in dieser Richtung magnetisiertes Magnetpaar (25, 26) entgegengesetzter Polarität vorgesehen ist, das bei der Drehung des Meßrades (2) den Sondenkopf (14) umkreist.

2. Durchflußmesser nach Anspruch 1, bei dem das Meßrad (2) einen Ringraum aufweist in den ein Magnetring eingesetzt ist, der in achsparalleler Richtung magnetisiert und in ein oder mehrere Zonenpaare eingeteilt ist, die abwechselnd in entgegengesetzter Richtung und in unterschiedlicher Stärke magnetisiert sind.

3. Durchflußmesser nach einem der Ansprüche 1 bis 2, bei dem der Sondenschaft (15) mehrere unterschiedliche Einschiebtiefen fixierende Ringnuten (17) trägt und je nach Durchflußmesser variante und Durchflußmesser nennweite in eine dieser Ringnuten (17) ein Sicherungsring (16) eingesetzt ist, der sich beim Einschieben der Sonde (13) gegen einen Absatz (18) der Hohlachse (4) legt und mit der Sonde (13) durch eine Schraube (19) in dieser Einsschiebstellung gehalten wird.

4. Durchflußmesser nach Anspruch 3, bei dem zum Einsetzen der Sonde (13) in eine Hohlachse (4) mit größerem Innendurchmesser eine Zentrierbüchse (21) auf den Sondenschaft (15) aufgeschoben und durch in Haltenuten (17) eingesetzte Sicherungsringe (22) fixiert ist.

5. Druchflußmesser nach einem der Ansprüche 1 bis 4 bei dem der als Sonde ausgebildete Impulsdraht-Sensor (13) in seinem Inneren einen Temperaturfühler trägt, dessen Signalleitung zusammen mit den Impulsleitungen (27, 28) des Impulsdraht-Sensors (13) nach außen geführt ist.

**Revendications**

1. Débitmètre, notamment un de ceux possédant une grande section nominale de passage, avec un détecteur électromagnetique d'impulsions dans lequel une roue de mesure (2) tournant à l'intérieur d'une chambre de mesure (6) porte un dispositif à aimants (25, 26) et dans lequel est prévu un capteur qui fonctionne selon le principe "Wiegand" à l'extérieur de la chambre soumise à la pression de service du débitmètre avec une multiplicité de fils d'impulsion (34) montés au sens longitudinal sur la surface de l'enveloppe d'un cylindre de fils de détection (33), auquel cas, lors de chaque rotation de la roue de mesure; il apparaît des impulsions magnétiques qui sont transformées dans une bobine de détection (32) s'étendant concentriquement dans le cylindre de fils d'impulsion en des impulsions électriques de tension, dont le nombre est une mesure du milieu à mesurer traversant la débitmètre, caractérisé par le fait que la roue de mesure (2) ou un rotor (48) commandé par la roue de mesure est logé de manière rotative sur une axe fixe complètement ou partiellement sous forme d'un essieu creux dans l'espace cylindrique creux (9) duquel est inséré un capteur de fils d'impulsion qui a la forme d'une sonde cylindrique (13) et qui porte sur sa tête de sonde (14) le cylindre de fils de détection (33) et la bobine de détection (32) et concentriquement à l'intérieur de l'espace creux de la bobine une culasse d'aimant (35) et qui possède une tige de sonde (15) conduisant vers l'extérieur, qui à l'intérieur contient les lignes électriques, d'impulsion du capteur de fils d'impulsion (27, 28) et en plus des éléments de support (16, 21) pour fixer la sonde (13) au corps (5) du débitmètre, auquel cas au moins une paire d'aimants possédant des polarités opposées est installée comme dispositif à aimants à proximité de l'essieu creux (4) dans la roue de mesure (2) ou le rotor (48) et qui s'étend parallèllement à l'essieu creux et qui est mangnétisée dans cette direction, circulant autour de la tête de la sonde (14) lors de la rotation de la roue de mesure (2).

2. Débitmètre selon la revendication 1, caractérisé en ce que la roue de mesure (2) a un espace annulaire dans lequel est placé un anneau magnétique magnétisé parallèlement à l'axe et qui est divisé dans une ou plusieurs paires zonales étant magnétisées alternativement dans des directions opposées et avec des forces différentes.

3. Débitmètre selon une des revendications 1 à 2, caractérisé en ce que la tige de la sonde (15) porte plusieurs gorges annulaires (17) fixant des profondeurs d'insertion différentes et où, selon la variante du débitmètre et la section nominale de passage du débitmètre, une rondelle d'arrêt (16) est placée dans une de ces gorges annulaires (17) qui, on insérant la sonde (13) se met contre un évidement (18) de l'essieu creux (4) et qui est maintenue avec la sonde (13) dans cette position d'inseration moyennant une vis (19).

4. Débitmètre selon la revendication 3, caractérisé en ce que pour monter la sonde (13) dans un essieu creux (4) possédant un diamètre intérieur plus grand, une boîte de centrage (21) est poussée sur la tige de la sonde (15) et est fixée par des rondelles d'arrêt (22) positionnées dans des gorges de support (17).

5. Débitmètre selon une des revendications 1 à 4, caractérisé en ce que le capteur de fils d'impulsion (13) porte à son intérieur, une sonde de température dont le fils de signaux est conduit vers l'extérieur avec les lignes d'impulsion (27, 28) du capteur de fils d'impulsion (13).

**Claims**

1. Flow meter, in particular of large standard width, with an electromagnetic pulse receiver, in which a measuring wheel (2) revolving within .a measuring chamber (6), carries a magnet system (25, 26) and a sensor according to the "Wiegand" principle is installed outside the space of the flow meter, submitted to operating pressure, with a plurality of pulse wires (34) installed in longitudinal direction arranged on the outer surface of a pulse wire cylinder (33), magnetic pulses being generated during each revolution of the measuring wheel which, within a pickup coil (32) concentrically positioned within the pulse wire cylinder are converted into voltage pulses, the number of which is a measurememt for the measuring· medium which has flowed through the flow meter characterized in that the measuring wheel (2) or a rotor (48), driven by the measuring wheel, is rotatably positioned on a fixed axis totally or partially in the form of a hollow axis (4, 47), into the cylinder hollow space (9) of which a pulse wire sensor is the form of a cylindric probe (13) is pushed, which carries at its probe top (14) the pulse wire cylinder (33) and the pickup coil (32) and concentrically within the hollow space of the coil a cylindrical magnet yoke (35) and which has a probe shaft (15) directed to the outside, containing in its inside the electric pulse lines of the pulse wire sensor (27, 28) and furthermore supporting elements (16, 21) in order to fix the probe (13) to the housing (5) of the flow meter, at least one pair of oppositely polarized magnets (25, 26) being provided as magnet system positioned in direct proximity to the hollow axis (4) into the measuring wheel (2) or the rotor (48) in parallel position with respect to the hollow axis and magnetized in this direction, which during revolution of the measuring wheel (2), circles round the probe top (14).

2. Flow meter according to claim 1 characterized in that the measuring wheel (2) has a circular space into which is placed a magnet ring being magnetized in parallel position to the axis and divided into one or more zonal pairs which are alternatingly magnetized in opposite direction and with different strengths.

3. Flow meter according to one of the claims 1 to 2, characterized in that the probe shaft (15) carries several circular grooves (17) fixing different push in depths, and that depending on the variant and standard width of the flow meter a sealing ring (16) is placed into one of these circular grooves (17) which when pushing in the probe (13) comes to rest against a recess (18) of the hollow axis (4) and is secured with the probe (13) in this push in position by means of a screw (19).

4. Flow meter according to claim 3 characterized in that in order to position the probe (13) into a hollow axis (4) with larger inside diameter a centering bush (21) is pushed onto the probe shaft (15) and fixed by sealing rings (22) placed into supporting grooves (17).

5. Flow meter according to one of the claims 1 to 4 characterized in that the pulse wire sensor (13), designed as a probe, carries in its inside a temperature sensing element the signal line of which is led to the outside together with the pulse lines (27, 28) of the pulse wire sensor (13).

Fig.1

Fig. 4

Fig. 2

Fig. 3